# EUROPÄISCHE PATENTSCHRIFT

(11) **EP 1 127 243 B1**
(45) Veröffentlichungstag und Bekanntmachung des Hinweises auf die Patenterteilung: **02.11.2006**
(21) Anmeldenummer: 99963212.8
(22) Anmeldetag: 04.11.1999
(51) Int. Cl.: G01B 7/16, G01L 5/00

(54) **VERFORMUNGSMESSER**
DEFORMATION MEASURING DEVICE
DISPOSITIF DE MESURE DE DEFORMATION

(30) Priorität: 04.11.1998 DE 19850872
(43) Veröffentlichungstag der Anmeldung: 29.08.2001
(73) Patentinhaber: Infineon Technologies AG, 81669 München (DE)
(72) Erfinder: AIGNER, Robert, D-81675 München (DE); HIEROLD, Christofer, D-81739 München (DE); OPPERMANN, Klaus-Günter, D-83607 Holzkirchen (DE); GLEHR, Manfred, D-93073 Neutraubling (DE)
(74) Vertreter: Ginzel, Christian
(86) Internationale Anmeldenummer: PCT/DE1999/003543
(87) Internationale Veröffentlichungsnummer: WO 2000/026608

(56) Entgegenhaltungen:
- DE-A- 2 715 831
- US-A- 5 337 606
- US-A- 5 511 420
- US-A- 5 786 621

## Beschreibung

Die vorliegende Erfindung betrifft einen Sensor als Halbleiterbauelement, der zur Messung von Materialverformungen, Kräften, Momenten und Wegen geeignet ist.

Zur Messung kleiner Verformungen werden für Massenanwendungen bislang Dehnmeßstreifen verwendet. Die erreichbare Genauigkeit ist bei Verwendung derartiger Verformungsmesser mit etwa 0,5 % des gesamten Meßbereiches deutlich schlechter als die Meßgenauigkeit anderer mechanischer Größen. Problematisch ist auch der enge Temperaturbereich, innerhalb dessen Dehnmeßstreifen verwendet werden können, sowie der hohe Leistungsbedarf der angeschlossenen Widerstandsbrücke.

Halbleiterchips, die z. B. einen Halbleiterkörper aus Silizium besitzen, können unter der Einwirkung von Drücken und Zugspannungen verformt werden. In der Regel verschlechtern sich dadurch die Betriebseigenschaften. In der US 5,337,606 ist ein mikromechanisch herstellbarer Beschleunigungssensor beschrieben, bei dem eine gitterförmige Struktur aus Polysilizium relativ zu dem Substrat beweglich verankert ist und eine Auslenkung dieser Gitterstruktur mittels auf dem Substrat befestigter streifenförmiger Elektroden durch eine kapazitive Messung erfaßt wird. Eine Verformung des Substrates bei einem derartigen Bauelement ist allenfalls geeignet, das Meßergebnis zu verschlechtern.

Weiterhin ist aus der US 5,786,621 eine mikromechanische Struktur bekannt, die einen stabilen ebenen Rahmen aufweist, auf dem eine Vielzahl von kammartigen, kapazitiven Aktuatoren angeordnet ist. Durch eine Anregung der Aktuatoren wird eine Bewegung der mikromechanischen Struktur in longitudinaler Richtung bewirkt. Durch eine Kapazitätsmessung wird die Auslenkung der beweglichen Struktur ermittelt.

Aufgabe der vorliegenden Erfindung ist es, einen Verformungsmesser anzugeben, der bei geringem Leistungsverbrauch in erweitertem Temperaturbereich verwendet werden kann und bei hoher Überlastfestigkeit eine hohe Auflösung und die Erzeugung digitaler Ausgangssignale ermöglicht.

Diese Aufgabe wird mit dem Halbleiterbauelement mit den Merkmalen des Anspruches 1 gelöst. Ausgestaltungen ergeben sich aus den abhängigen Ansprüchen.

Das erfindungsgemäße Halbleiterbauelement ist ein mikromechanischer Sensor, der auf der Erkenntnis beruht, daß die bei üblichen mikromechanischen Sensoren unerwünschten Verfälschungen der Messungen infolge einer Verformung des Halbleiterchips meßtechnisch zur Erfassung derartiger Verformungen oder der diesen Verformungen zugrunde liegenden Drücke und Spannungen ausgenutzt werden können. Zu diesem Zweck besitzt der erfindungsgemäße Verformungsmesser Balken, die relativ zu auf oder in dem Substrat fest angeordneten Elektroden beweglich sind und die aus einem elektrisch leitfähigen Material sind, vorzugsweise aus Silizium oder Polysilizium, das leitfähig dotiert ist. Eine Verformung des Substrates kann erfaßt werden, indem die differentiellen Kapazitätsänderungen dieser Balken gegenüber benachbart dazu angeordneten Elektroden des Substrates bestimmt werden. Vorzugsweise werden zwei voneinander getrennte Gruppen von im Wechsel kammartig miteinander verzahnten Elektrodenbalken verwendet, die elektrisch leitend an ihren Enden miteinander verbunden und auf dem Substrat verankert sind. Ein derartiger Aufbau ermöglicht die Verwendung einer kapazitiven Meßbrücke zwischen vier Anschlüssen zur elektronischen Auswertung der Kapazitätsänderung.

Es folgt eine genauere Beschreibung des erfindungsgemäßen Verformungsmessers anhand der Figuren 1-3, die bevorzugte Ausgestaltungen als Beispiele zeigen.
- Figuren: 1a und 1b zeigen Ausführungsbeispiele eines erfindungsgemäßen Verformungssensors in Aufsicht.
- Figur 2: zeigt die in Figur 1 dargestellten Verformungsmesser im Querschnitt.
- Figur 3: zeigt ein Schaltbild für die kapazitive Meßbrücke der bevorzugten Ausgestaltung nach Figur 1b.

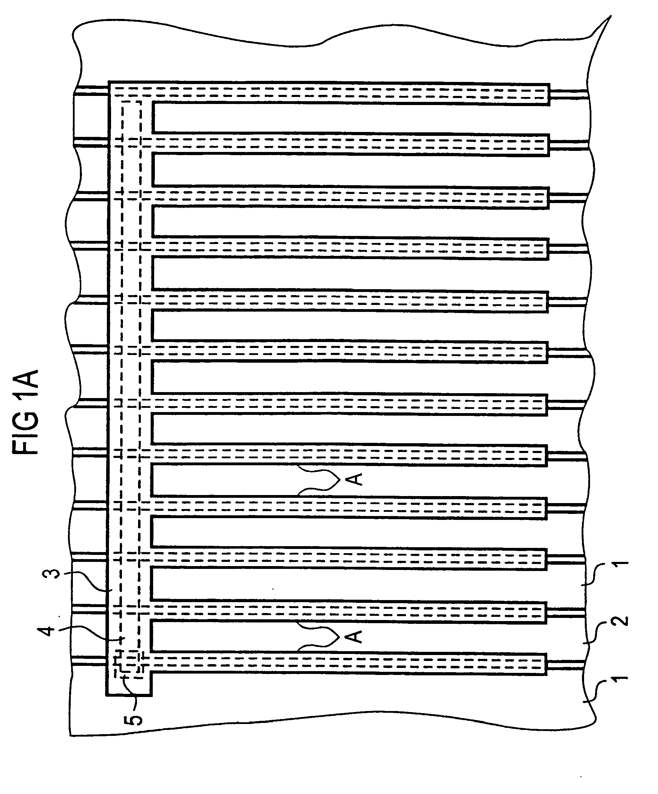

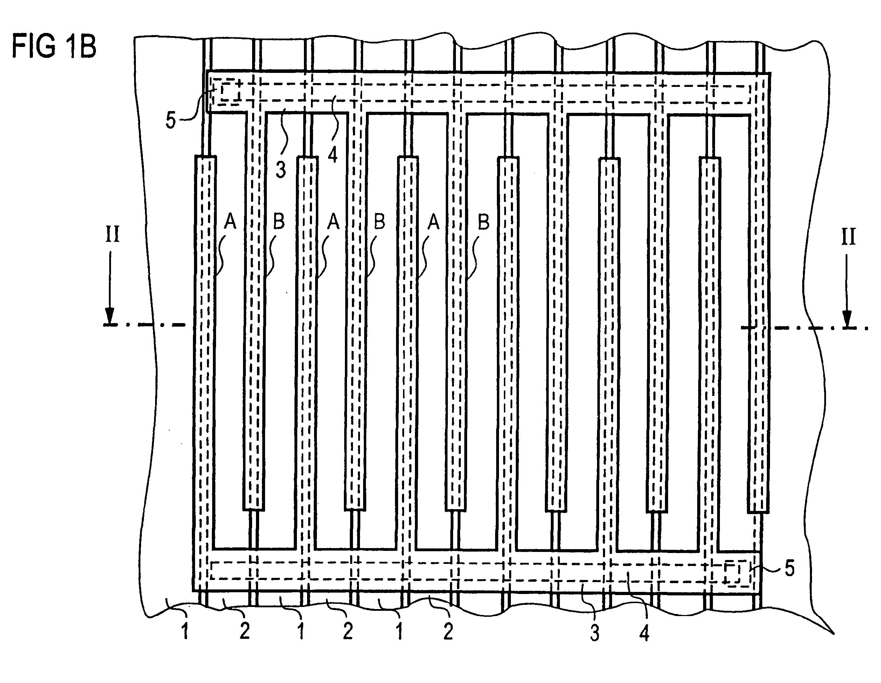

Figur 1a zeigt in Aufsicht einen Verformungsmesser als Halbleiterbauelement, wie es mittels CMOS-kompatibler Mikromechanik hergestellt werden kann. Eine obere Schicht von Anteilen vorhandener Elektroden, Passivierungen oder Abdeckungen ist in der Ansicht der Figur la entfernt. Es sind daher erkennbar die im Schema eingezeichneten streifenförmigen und parallel zueinander angeordneten Elektroden 1, 2, die im Substrat oder in auf das Substrat aufgebrachten Schichten ausgebildet sind. Diese Elektroden 1, 2 können z. B. dotierte Bereiche in Halbleitermaterial sein. Es sind auf der Halbleiteroberseite mikromechanisch herstellbare Strukturen aufgebracht, die Elektrodenbalken A umfassen, die vorzugsweise an einem Ende durch einen quer verlaufenden Balken 3 elektrisch leitend miteinander verbunden und auf dem Substrat befestigt sind. Diese Befestigung kann beispielsweise längs des gesamten Balkens 3 vorhanden sein, z. B. in dem gestrichelt umrandeten Bereich der Verankerung 4. Eine derartige Verankerung eignet sich insbesondere zur Messung von Scherungen des Substrates. Eine Alternative ist z. B. durch eine Befestigung innerhalb des ebenfalls gestrichelt umrandeten Gebietes der Verankerung 5 gegeben. Eine solche Verankerung, die den größten Abschnitt des Balkens 3 gegenüber dem Substrat beweglich läßt, ist insbesondere zur Messung von Dehnungen oder Stauchungen des Substrates geeignet. Die eingezeichneten Elektrodenbalken können alle an demselben Balken 3 mit einem Ende befestigt sein. Die in Figur 1b dargestellte Ausführungsform mit zwei getrennten Balken 3, an denen die Elektrodenbalken A, B im Wechsel befestigt sind, so daß die Elektrodenbalken kammartig miteinander verzahnt sind, hat meßtechnische Vorteile, die weiter unten beschrieben werden.

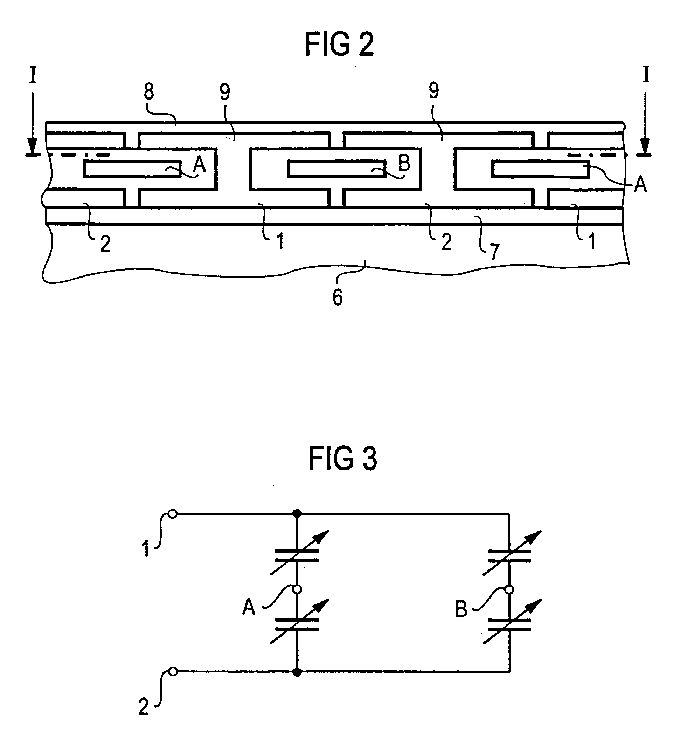

Figur 2 zeigt den in Figur 1b kenntlich gemachten Querschnitt der beschriebenen Ausführungsbeispiele. Es ist in Figur 2 dargestellt, daß auf dem Substrat 6 eine Isolationsschicht 7 aufgebracht ist. Auf dieser Isolationsschicht 7 befinden sich die relativ zum Substrat fest angebrachten Elektroden 1, 2.

Diese Elektroden können statt dessen ganz oder teilweise durch in dem Substrat ausgebildete dotierte Bereiche gebildet sein, die von dielektrischem oder sehr schwach oder entgegengesetzt dotiertem Halbleitermaterial umgeben sind. In den zwischen den Elektroden 1, 2 vorhandenen Hohlräumen sind die Elektrodenbalken A, B beweglich zum Substrat angeordnet. Vorzugsweise ist die Struktur nach oben mit einer Passivierungsschicht 8 abgedeckt. Die hier als Beispiel dargestellte Anordnung hat den Vorteil, daß die Elektrodenbalken A, B so von den Elektroden 1, 2 umgeben sind, daß sich eine weitgehend lineare Änderung der Kapazitäten bzw. Kapazitätsdifferenzen zu jeweils benachbarten Elektroden ergibt, wenn die Elektrodenbalken relativ zum Substrat ausgelenkt werden.

Die in einem Körper auftretenden Spannungen werden mit einem Tensor zweiter Stufe, dem sogenannten Spannungstensor beschrieben. Dieser Tensor ist darstellbar als dreireihige quadratische Matrix, deren Diagonalelemente die Spannung in je einer von drei zueinander senkrechten Richtungen und deren übrige Elemente die Spannungen in den jeweils zu diesen Richtungen senkrechten Ebenen als Scherungen angeben. Aufgrund der elastischen Bedingungen des Körpers ist der Spannungstensor symmetrisch. Es läßt sich daher eine Koordinatentransformation angeben, so daß in dem neuen Koordinatensystem der Spannungstensor eine Diagonalmatrix ist. Die das neue Koordinatensystem definierenden Achsen sind die Eigenvektoren dieser Matrix, die Hauptspannungsrichtungen; die Diagonalelemente sind die zugehörigen Eigenwerte, die Hauptspannungen. In Richtung der Winkelhalbierenden zwischen den Hauptspannungsrichtungen sind die Schubspannung und die Schubverzerrung maximal.

Mit dem Verformungsmesser sollen Verformungen des Halbleiterkörpers in der Ebene, in der die Elektroden angeordnet sind, d. h. in der Ebene der Chipoberseite, detektiert werden. Es werden also Spannungen und Scherungen, die in einer Ebene auftreten, festgestellt. Bei einem zur Scherungsmessung vorgesehenen Verformungsmesser werden daher die Elektrodenbalken A, B vorzugsweise längs der Winkelhalbierenden zwischen den beiden in der Ebene liegenden Hauptspannungsrichtungen ausgerichtet. Die Enden der Elektrodenfinger sind vorzugsweise vermittels des Balkens 3 in der in den Figuren 1a und 1b als Beispiel eingezeichneten Fläche der Verankerung 4, die sich über die ganze Balkenlänge erstreckt, auf dem Substrat befestigt. Der im Substrat wirkende Spannungszustand wird nicht in den freistehenden Teil der Elektrodenbalken übertragen; der eigentliche Elektrodenbalken bleibt ab der Verankerungsstelle verformungsfrei, während sich das Substrat und die darin angebrachten Elektroden verformen.

In dem Querschnitt, der in Figur 2 gezeichnet ist, ist erkennbar, daß bei dieser bevorzugten Ausführungsform die fest an dem Substrat befestigten Elektroden 1 und 2 vorzugsweise flächige Ausdehnungen über und unter den Elektrodenbalken A, B aufweisen. Diese flächigen Anteile sind durch Stützen 9 elektrisch leitend miteinander verbunden und mechanisch stabilisiert. Wegen der zumindest teilweisen Überlappung der Flächen der Elektroden 1, 2 und der Elektrodenbalken A, B ist die Kapazitätsänderung im wesentlichen linear zur Auslenkung der Elektrodenbalken und damit in etwa linear zur Schubverformung des Substrates. Dabei wird davon ausgegangen, daß die Elektrodenbalken sich im wesentlichen in der Ebene, in der sie angeordnet sind, relativ zum Substrat bewegen. Eine vertikale Verbiegung der Elektrodenbalken oder andere herstellungsbedingte Toleranzen sind dabei weitgehend unerheblich. Der Abstand der Elektrodenbalken zu den vertikalen Stützen 9 der festen Elektroden 1, 2 kann so groß gewählt werden, daß kein nennenswerter Beitrag zur Kapazitätsänderung von diesen leitenden Anteilen der Elektroden 1, 2 herrührt. Die überlastsicherheit der mikromechanischen Struktur ist durch den lateralen großen Abstand der Elektrodenbalken von den Stützen 9 gegeben.

Bei der angegebenen einfachen Ausführung, bei der alle Elektrodenbalken an demselben quer verlaufenden Balken 3 befestigt sind und so alle miteinander elektrisch leitend verbunden sind, geschieht die Auswertung durch Feststellung der differentiellen Kapazitätsänderungen der Elektrodenbalken gegenüber den jeweils benachbarten Elektroden 1 bzw. 2. Die Elektrodenbalken bilden so den Mittenanschluß einer kapazitiven Halbbrücke, die durch zwei veränderbare, in Reihe zueinander geschaltete Kondensatoren gebildet wird. Die äußeren Anschlüsse werden durch die Elektroden 1 bzw. 2 gegeben. Damit erhält man als Kapazitätsänderung eines Verformungsmessers mit der Anzahl n und der Länge 1 der Elektrodenbalken den Wert ΔC_{1A} = -ΔC_{2A} = n·ε₀· (d₁⁻¹ + d₂⁻¹)·1²·γ / 2, wobei γ der Wert der Schubverformung, d₁ und d₂ die Werte des oberen bzw. unteren Luftspaltes zwischen den Elektroden und ε₀ die elektrische Feldkonstante, auch als absolute Dielektrizitätskonstante bezeichnet, sind.

Die realisierbare Länge der Elektrodenbalken hängt von technologischen Gegebenheiten ab. Falls in der Siliziumschicht, in der die Elektrodenbalken strukturiert sind, eine Zug- oder Druckspannung vorhanden ist, sind die Elektrodenbalken zu den freien Enden hin zunehmend verbogen. Es kann daher günstiger sein, hohe Empfindlichkeiten des Verformungssensors mit kleineren Luftspalten zwischen den Elektroden statt mit längeren Elektrodenbalken zu erzielen.

Die in Figur 1b dargestellte bevorzugte Ausführungsform mit zwei Gruppen kammartig miteinander verzahnter Elektrodenbalken A bzw. B hat den Vorteil, daß durch Verwendung der vier verschiedenen Anschlüsse eine vollständige kapazitive Brücke zur Erfassung der Meßsignale zur Verfügung steht. Die zugehörige Schaltung ist in Figur 3 im Schema dargestellt. Es ist in diesem Schaltbild erkennbar, daß die Elektrodenbalken A und die Elektrodenbalken B jeweils mit den auf verschiedenen Seiten benachbarten Elektroden 1 und 2 in ihrer Kapazität veränderliche Kondensatoren bilden. Kleinste Verstimmungen derartiger kapazitiver Brücken lassen sich beispielsweise mit Σ-Δ-Modulatoren in Switched-Capacitor-Technik hochgenau ermitteln. Bei derartigen an sich bekannten Schaltungen folgt beispielsweise nach differentiellen SC-Eingangsintegratoren direkt ein Quantisierer, dessen Ausgangssignal rückgekoppelt wird. Das Ausgangssignal des Modulators ist ein hochfrequenter Bit-Strom, der von einer elektronischen Logikschaltung, die vorzugsweise auf demselben Chip monolithisch integriert ist, digital weiterverarbeitet werden kann. Die erreichbare Auflösung in Bit ist durch das Verhältnis der Σ-Δ-Betriebsfrequenz und der Signalfrequenz bestimmt. Ein Dezimierungsfilter führt das hochfrequente 1-Bit-Signal in ein niederfrequentes Multi-Bit-Signal über und realisiert gleichzeitig eine Tiefpaßfilterung.

Wegen der Symmetrie der Elektrodenanordnungen gemäß Figur 1b ist der Einfluß von Temperaturschwankungen auf den Nullpunkt der Messung bei unverformtem Substrat gering. Thermische Ausdehnungen können als räumlich isotrop angenommen werden und liefern daher in der Meßbrücke keine Differenzsignale. Eine sehr geringe Querempfindlichkeit bezüglich Verbiegung und Verzug des Chips ist durch die Symmetrieeigenschaften gewährleistet. Auch herstellungsbedingte Zug- und Druckspannungen entlang der Elektrodenbalken oder des der Verankerung dienenden Balkens 3, die nicht von der Verformung des Substrates herrühren, führen nicht zu Differenzsignalen in der Meßbrükke. Eine als Folge von Justagefehlern beim Herstellungsprozeß möglicherweise entstehende Unsymmetrie kann durch Zusammenschalten von zwei Elektrodenanordnungen gemäß Figur la oder 1b, die um 90° zueinander verdreht angeordnet sind, ausgeglichen werden. Der Sensor enthält dann zwei Anordnungen entsprechend Figur 1a bzw. 1b. Es ist auch möglich, solche Anordnungen auf demselben Substrat mehrfach anzubringen, um die Meßgenauigkeit weiter zu erhöhen.

Auswirkungen einer Verbiegung der Elektrodenbalken sowie thermomechanische Einflüsse können durch eine geeignete Verschaltung mittels eines Kompensationskondensators eliminiert werden. Dieser Kompensationskondensator wird bei der angegebenen bevorzugten Schaltungsausführung in den Rückkoppelzweig des SC-Eingangsintegrators geschaltet und besitzt prinzipiell den schaltungstechnischen Aufbau des Schaltbildes von Figur 3, in dem aber die Anschlüsse 1 und 2 bzw. A und B miteinander verbunden sind. Ein solcher Kompensationskondensator kann durch ein weiteres, gleichartiges mikromechanisches Bauelement gebildet sein.

Der Verformungsmesser ist in der alternativen Ausgestaltung mit einer kleinen Fläche der Verankerung 5 auf dem Substrat für eine Dehnungsmessung besonders geeignet. In die freistehende Elektrodenstruktur werden weder Kräfte noch Momente eingeleitet, so daß sich bei Streckung oder Stauchung des Substrats keine Verformungen der freistehenden Elektrodenbalken ergeben. Die Meßgröße ist die Kapazitätsänderung der Elektrodenbalken gegenüber den am Substrat befestigten Elektroden 1, 2. Der Wert der Kapazitätsänderung bei einer Verformung des Substrates ist bei diesem Dehnungsmesser nicht proportional zum Quadrat der Länge 1 der Elektrodenbalken, sondern proportional zum Produkt aus dieser Länge und der Länge des Balkens 3.

Bei dem Dehnungsmesser ist die Ausführungsform gemäß Figur 1b vorzuziehen, da die Ausführung nach Figur 1a eine vergleichsweise große Querempfindlichkeit gegenüber Schubverzerrungen aufweist. Bei der Anordnung gemäß Figur 1b können diese Auswirkungen der Schubverzerrungen besser eliminiert werden. Die angeschlossene elektronische Schaltung kann im Prinzip dem Ausführungsbeispiel als Scherungssensor entsprechen.

Nimmt man thermische Ausdehnungen als räumlich isotrop an, so entstehen durch ungleiche thermische Ausdehnungskoeffizienten des Meßobjektes und des damit verbundenen Substrats des Verformungssensors sowie der Elektrodenbalken kleine Differenzsignale in der Meßbrücke, die bei der Scherungsmessung nicht auftreten. Diese Fehler bei der Messung absoluter Dehnungen lassen sich nicht durch den Kompensationskondensator unterdrücken. Eine Kalibrierung mittels einer Messung der Temperatur des Sensors schafft bei Bedarf in gleicher Weise Abhilfe, wie dies herkömmlich bei Dehnmeßstreifen üblicherweise geschieht.

Der aktive Sensorbereich sollte möglichst in die Mitte des Chips plaziert werden, weil dort der Spannungszustand des Meßobjektes mit bester Ankoppelung in den Chip übertragen ist und gegebenenfalls auftretende Randeffekte abgeklungen sind. Für die Chipgröße ergeben sich.daraus Mindestabmessungen, die aus der Dicke des Chips und den mechanischen Eigenschaften des Montagematerials ohne weitere Schwierigkeiten ermittelt werden können. Bei der Montage des Verformungsmessers auf das Meßobjekt sind hohe Anforderungen an die mechanischen Eigenschaften der Verbindung gestellt. Der Verformungsmesser unterscheidet sich in dieser Hinsicht aber nicht von herkömmlichen Dehnmeßstreifen, so daß die von den Dehnmeßstreifen bekannten Vorgehensweisen auf die Montage des erfindungsgemäßen Verformungsmessers entsprechend übertragen werden können. Da der Chip selbst bis zur Bruchgrenze des Materials des Halbleiterkörpers überlastfest ist, wird die maximale Verformung durch plastische Effekte oder Zerstörung der Verbindungsschicht zum Meßobjekt definiert.

Dehnmeßstreifen werden in der Regel geklebt. Wegen der höheren thermischen Belastbarkeit des erfindungsgemäßen Verformungsmessers sind aber auch andere Verbindungstechniken wie beispielsweise Löten, anodisches Bonden oder Glas-Bonden denkbar. Ein Dünnschleifen der Chips auf eine Dicke von 100 µm bis 300 µm verringert die Scherbelastung der Klebeverbindung deutlich. Weitere Verbesserungen erreicht man mit einem Chip, der zum Rand hin dünner wird.

Der Verformungsmesser hat den weiteren Vorteil, daß eine Anordnung mehrerer der Elektrodenanordnungen gemäß Figur 1a oder 1b auf demselben Chip, auch mit unterschiedlichen Ausrichtungen relativ zum Substrat und damit verschiedenen Achsen der Empfindlichkeit, realisierbar ist.

## Patentansprüche

1. Halbleiterbauelement als Verformungsmesser,
- bei dem auf oder in einem Substrat (6) erste Elektroden (1) und zweite Elektroden (2) angebracht sind,
- bei dem parallel zueinander angeordnete Elektrodenbalken (A, B) vorhanden sind, die von den Elektroden (1, 2) elektrisch isoliert und relativ zum Substrat beweglich sind,
- bei dem die ersten und zweiten Elektroden (1, 2) streifenförmig parallel zu den Elektrodenbalken (A, B) verlaufend ausgebildet sind und
- bei dem die ersten Elektroden (1) und die zweiten Elektroden (2) im Wechsel angeordnet sind,
**dadurch gekennzeichnet, daß**
- die Elektrodenbalken (A, B) jeweils an einem Ende mit anderen Elektrodenbalken elektrisch leitend verbunden auf dem Substrat befestigt sind und
- die Elektrodenbalken (A, B) relativ zu den ersten und zweiten Elektroden (1, 2) so angeordnet sind, daß bei einer Scherung oder Dehnung des Substrates in einer Ebene, in der die Elektroden angeordnet sind, die Kapazität zwischen einem Elektrodenbalken und einer dazu benachbarten ersten Elektrode (1) und die Kapazität zwischen diesem Elektrodenbalken und einer dazu benachbarten zweiten Elektrode (2) sich gegensinnig zueinander ändern.

2. Halbleiterbauelement nach Anspruch 1,
bei dem die Enden der Elektrodenbalken (A, B) jeweils an einem Balken (3) oder einer Schicht, der bzw. die auf dem Substrat angebracht ist, derart befestigt sind, daß bei einer Scherung des Substrates (6) die befestigten Enden der Elektrodenbalken mitgeführt werden.

3. Halbleiterbauelement nach Anspruch 1,
bei dem die Enden der Elektrodenbalken (A, B) jeweils an einem Balken (3) oder einer Schicht, der bzw. die auf dem Substrat stellenweise verankert ist, derart befestigt sind,
daß bei einer Dehnung des Substrates (6) die befestigten Enden der Elektrodenbalken in konstantem Abstand zu einer Verankerung des Balkens bzw. der Schicht auf dem Substrat gehalten werden.

4. Halbleiterbauelement nach einem der Ansprüche 1 bis 3,
- bei dem von den Elektrodenbalken erste Elektrodenbalken (A) **an einem Ende elektrisch leitend miteinander verbunden auf dem substrat befestigt sind** und zweite Elektrodenbalken (B) an einem Ende elektrisch leitend miteinander verbunden auf dem Substrat befestigt sind,
- die ersten Elektrodenbalken (A) und die zweiten Elektrodenbalken (B) kammartig miteinander verzahnt sind und
- die ersten Elektroden (1), die zweiten Elektroden (2), die ersten Elektrodenbalken (A) und die zweiten Elektrodenbalken (B) mit getrennten elektrischen Anschlüssen versehen sind.

5. Halbleiterbauelement nach Anspruch 4,
bei dem eine kapazitive Meßbrücke gebildet ist, indem die ersten Elektrodenbalken (A) und die zweiten Elektrodenbalken (B) im Wechsel angeordnet sind.

## Claims

1. Semiconductor component as a deformation gauge,
- in which first electrodes (1) and second electrodes (2) are fit on or in a substrate (6),
- in which there are electrode bars (A, B) which are arranged parallel to one another, are electrically insulated from the electrodes (1, 2) and move relative to the substrate,
- in which the first and second electrodes (1, 2) are designed such that they run in the form of strips parallel to the electrode bars (A, B),
- in which the first electrodes (1) and the second electrodes (2) are arranged alternately,
**characterized in that**:
- the electrode bars (A, B) are in each case mounted on the substrate such that they are electrically conductively connected at one end to other electrode bars, and
- the electrode bars (A, B) are arranged relative to the first and second electrodes (1, 2) such that, in the event of shear or strain of the substrate on a plane, in which the electrodes are arranged, the capacitance between an electrode bar and a first electrode (1) adjacent to it, and the capacitance between this electrode bar and a second electrode (2) adjacent to it vary in opposite senses to one another.

2. Semiconductor component according to Claim 1,
in which the ends of the electrode bars (A, B) are each attached to a bar (3) or a layer which is fit on the substrate, in such a manner that the attached ends of the electrode bars are also moved in the event of shear in the substrate (6).

3. Semiconductor component according to Claim 1,
in which the ends of the electrode bars (A, B) are each attached to a bar (3) or a layer which is anchored at points on the substrate, in such a manner that, in the event of strain in the substrate (6), the attached ends of the electrode bars are held at a constant distance from an anchor of the bar or of the layer on the substrate.

4. Semiconductor component according to Claims 1 to 3,
- in which, of the electrode bars, first electrode bars (A) are mounted on the substrate such that they are electrically conductively connected to one another and second electrode bars (B) are mounted on the substrate such that they are electrically conductively connected to one another at one end,
- the first electrode bars (A) and the second electrode bars (B) are interleaved with one another like a comb, and
- the first electrodes (1), the second electrodes (2), the first electrode bars (A) and the second electrode bars (B) are provided with separate electrical connections.

5. Semiconductor component according to Claim 4,
in which a capacitive measurement bridge is formed by the first electrode bars (A) and the second electrode bars (B) being arranged alternately.

## Revendications

1. Composant à semi conducteurs servant de dispositif de mesure de déformation,
- dans lequel des premières électrodes (1) et des deuxièmes électrodes (2) sont disposées sur une substrat (6) ou dans un substrat (6).
- dans lequel il y a des barrettes (A, B) d'électrode qui sont disposées parallèlement entre elles, qui sont isolées électriquement des électrodes et qui sont mobiles par rapport au substrat,
- dans lequel les premières électrodes (1, 2) sont constituées de manière à s'étendre en forme de bandes parallèlement aux barrettes (A, B) d'électrode et,
- dans lequel les premières électrodes (1) et les deuxièmes électrodes (2) sont disposées en alternance,
**caractérisé en ce que**
- les barrettes (A, B) d'électrode sont fixées sur le substrat en étant reliées, d'une manière conductrice de l'électricité, respectivement par une extrémité à d'autres barrettes d'électrode et
- les barrettes (A, B) d'électrode sont disposées par rapport au premières et aux deuxièmes électrodes (1, 2) de façon à ce que, s'il se produit un cisaillement ou une dilatation du substrat dans un plan dans lequel sont disposées les électrodes, la capacité entre une barrette d'électrode et une première électrode (1) qui en est voisine et la capacité entre cette barrette d'électrode et une deuxième électrode qui en est voisine se modifient en sens inverse l'une de l'autre.

2. Composant à semi- conducteurs selon la revendication 1,
dans lequel les extrémités des barrettes (A, B) d'électrode, sont fixées respectivement sur une barrette (3) ou une couche qui est mise sur le substrat, de façon à ce que, s'il se produit un cisaillement du substrat (6), les extrémités fixées des barrettes d'électrode accompagnent le mouvement.

3. Composant à semi- conducteurs selon la revendication 1,
dans lequel les extrémités des barrettes (A, B) d'électrode sont fixées respectivement à la barrette (3) ou a une couche qui est ancrée par endroit au substrat de façon à ce que, s'il se produit une dilatation du substrat (6), des extrémités fixées des barrettes d'électrode sont maintenues à distance constante d'un ancrage de la barrette ou de la couche sur le substrat.

4. Composant à semi- conducteurs suivant l'une des revendications 1 à 3,
- dans lequel parmi les barrettes d'électrode, les premières barrettes (A) d'électrode sont fixées sur le substrat en étant reliées entre elles, d'une manière conductrice de l'électricité, à une extrémité et les deuxièmes barrettes d'électrode sont fixées au substrat en étant reliées entre elles, d'une manière conductrice de l'électricité, à une extrémité,
- les premières barrettes (A) d'électrode et les deuxièmes barrettes (B) d'électrode sont interdigitées et
- les premières électrodes (1), les deuxièmes électrodes (2) les premières barrettes (1) d'électrode et les deuxièmes barrettes (2) d'électrode sont munies de bornes électriques distinctes.

5. Composant à semi- conducteurs selon la revendication 4,
dans lequel il est formé un pont capacitif de mesure en disposant les premières barrettes (A) d'électrode et les deuxièmes barrettes (B) d'électrode en alternance.
